# EUROPEAN PATENT APPLICATION

(11) **EP 2 953 071 A1**
(43) Date of publication of application: **09.12.2015**
(21) Application number: 14305845.1
(22) Date of filing: 04.06.2014
(51) Int. Cl.: G06Q 10/06

(54) **Purchase support**

(71) Applicant: Hewlett-Packard Development Company, L.P., Houston, TX 77070 (US)
(72) Inventor: Chenu, Jean-Philippe, 38053 Grenoble Cedex 09 (FR); Bernardi, Laurent, 38053 Grenoble Cedex 09 (FR); Domet de Mont, Dominique, 38053 Grenoble Cedex 09 (FR); Descarpentries, Elodie, 38053 Grenoble Cedex 09 (FR)
(74) Representative: Delumeau, François Guy

(57) **Abstract**

Purchase support can include a resource identifier including identifying information, a purchase, a support agent that has a capability to support the purchase, and a web-based real-time communication session between a client and the support agent.

## Description

### Background

Products and/or services may be purchased by consumers. Merchants (e.g., a manufacturer of a product) that sell products and/or services to consumers may directly and/or indirectly provide support for products sold by the merchants to consumers. Providing support for products and/or services continues to present challenges to both merchants and consumers.

### Brief Description of the Drawings

Figure 1 illustrates a diagram of an example of a system for purchase support according to the present disclosure.
Figure 2 illustrates a diagram of an example computing device according to the present disclosure.
Figure 3 illustrates an example of an environment in which various example processes can be implemented for purchase support according to the present disclosure.
Figure 4 illustrate an example of a record according to the present disclosure.
Figure 5 illustrates a flow diagram of an example of a method for purchase support according to the present disclosure.

### Detailed Description

With increasing pressure on organizations to improve their performance, the organizations may seek to increase efficiencies related to supporting goods and/or services they sell, for instance, by pursuing efficient resolution and/or management of client support inquires related to purchased goods and/or purchased services. As used herein, a client refers to a purchaser of a purchased good and/or a purchased service. Such a client may communicate with a merchant (e.g., a manufacturer of a good) that sells goods and/or services to clients. For example, a client may communicate with a merchant in an effort to enlist support from the merchant in supporting a purchased good or service sold to the client. Examples of support that can be received include warranty information, information related to a make, a model, or other identifying information associated with the good, information related to a purchase date of the good, receiving instructions on assembly of a purchased good, procurement of replacement parts for a purchased good, troubleshooting information, among other types of support.

Clients seeking support for a purchase from a merchant may have to recall and/or identify contact information (e.g., a phone number associated with a support line maintained by a merchant or other organization supporting a good and/or service). This can lead to difficulties such as a client being unable to identify the contract information and thus, being unable to obtain the desired support. Further, clients may themselves have to physically input information (e.g., dial numbers) which itself can induce errors into the process (e.g., incorrectly dialing a telephone number) even when the contact information has been identified. In addition, a client seeking support may encounter various wait times (e.g. a period(s) in which they are seeking support but have not received such support), for example, a wait time associated with automated call processing, and/or a wait time to identify a support agent who is suitable to support the client, among other difficulties. Such client intensive seeking of support for a purchased good and/or a purchased service can be difficult, costly (e.g., time-consuming), and/or ineffective, among other difficulties.

In contrast, examples of the present disclosure include methods, systems, and computer-readable and executable instructions for purchase support. Purchase support can, for example, include a resource identifier including identifying information (e.g., a resource identifier including identifying information that identifies a purchase), a support agent that has a capability to support the purchase, and a web-based real-time communication session between a client and the support agent. Advantageously, purchase support can, for example, facilitate a client to obtain support without use of information other than identifying information conveniently included in a resource identifier (e.g., a resource identifier in a record of a purchase), as described herein.

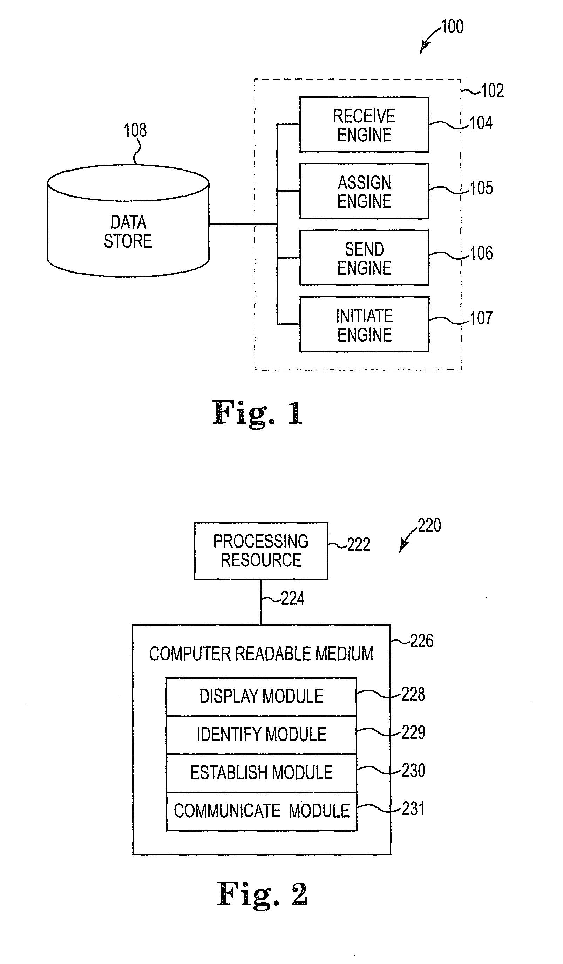

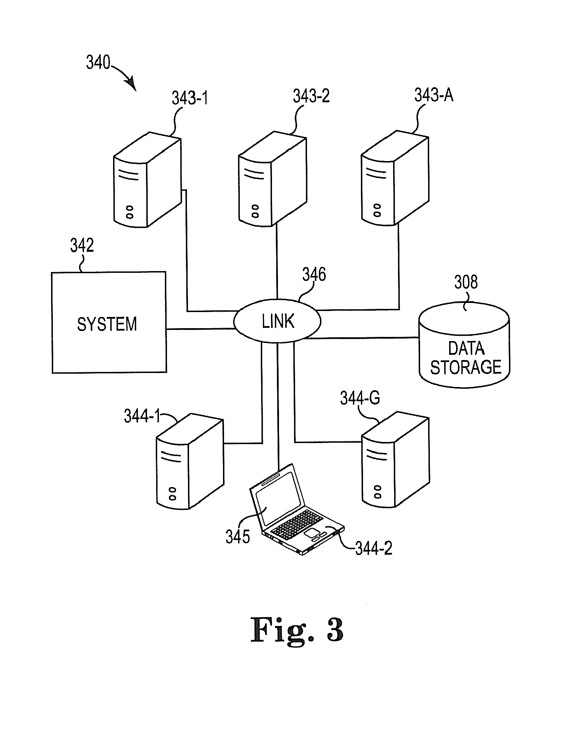

Figure 1 illustrates a diagram of an example of a system 100 for purchase support according to the present disclosure. The system 100 can include a data store 108 (e.g., analogous to data store 103 as referenced in Figure 3), a purchase support system 102, and/or a number of engines. The purchase support system 102 can be in communication with the data store 108. The purchase support system 102 can include a number of engines (e.g., a receive engine 104, an assign engine 105, a send engine 106, an initiate engine 107, etc.). The purchase support system 102 can include additional or fewer engines than illustrated to perform the various functions described herein.

The number of engines can include a combination of hardware and programming to perform a number of functions described herein (e.g., a receive engine receive a request from a client for a resource associated with a resource identifier that is associated with a purchase, etc.). Each of the engines can include hardware or a combination of hardware and programming designated or designed to execute a module (e.g., a particular module). The programming can include instructions (e.g., software, firmware, etc.) stored in a memory resource (e.g., computer-readable medium) as well as a hard-wired program (e.g., logic).

The receive engine 104 can receive a request from a client for a resource associated with a resource identifier that is associated with a purchase. The resource associated with the resource identifier can include a support agent and/or a plurality of support agents (e.g., a support group including a plurality of support agents) having a capability to support a purchase, as described herein. The purchase can include at least one of a purchased good and/or a purchased service. A purchased good refers to a tangible (e.g., physical) item sold to the client. For example, a purchased good can be sold in response to monetary compensation being provided by the client or otherwise to a merchant having ownership of the purchased good. A purchase service refers to an act or actions sold to a client which may or may not produce a tangible item.

The resource identifier includes identifying information that can identify the purchase (e.g., a product serial number), the client (e.g., a name or other identifier associated with the client), a date and/or time of the purchase, a location of the purchase, warranty information associated with the purchase (e.g., whether a warranty for the purchase was bought by the client, optional components (e.g., add-ons) to the purchase that were sold along with the purchase, whether the purchase is under warranty at a time of a request from a client, and/or terms of a warranty covering the purchase), among other information.

As used herein, a resource identifier can be an electronic and/or a physical representation including the identifying information. For example, a resource identifier can be printed by suitable printing hardware capable of printing the resource identifier onto a medium (e.g., paper) and/or a purchase itself. The resource identifier could be printed as plain text, an image, a two-dimensional barcode, a QR (quick response) code, or other suitable format. Similarly, the resource identifier can be encoded in an electronic document (e.g., a record of a purchase) as a hyperlink, uniform resource identifier (URI), and/or graphical representation (e.g., an electronic signature), among other suitable ways to promote purchase support.

In some examples, the resource identifier can include at least one of a QR code (e.g., an image of a QR code) and/or or a URI. A URI refers to information such as a character string that constitutes a reference to a resource, such as a resource associated with the resource identifier (e.g., a support agent and/or a plurality of support agents). QR code refers to a barcode (e.g., a matrix barcode) including information. In some examples, the QR code can include information visually representative of a URI, a uniform resource locator (URL), identifying information, and/or a plurality of characters associated with a particular portion of a web site associated with a URI and/or URL. In some examples, an extract engine (not shown) can extract a URL, among other information, from the QR code. Extraction can be accomplished by optical capturing and/or processing optical code (e.g., identifying information) included in a QR code.

An assign engine 105 can assign, based on the identifying information, a support agent having a capability to support the purchase, to the request (e.g., to field the request). For example, a support agent can be assigned based on a type the purchase (e.g., a particular good and/or a particular service), a client that made the purchase, warranty information associated with the purchase, and/or other identifying information. Regardless, a support agent having a capability to support the purchase can be assigned to the request.

A send engine 106 can send the request to the support agent (e.g., the support agent assigned by the assign engine 105). In some examples, the send engine 106 can send the request to a session initiation protocol (SIP)-uniform resource identifier (URI) associated with the support agent. The SIP-URI and/or an indication of a support agent having a capability to support the purchase can be received from a server, as described herein.

An initiate engine 107 can initiate a web-based real-time communication session between the client and the support agent. As used herein, a web-based real-time communication session refers to an electronic communication that utilizes the internet and/or internet browser(s) to facilitate the communication. Examples of web-based real-time communication sessions include those enabled by WebRTC among other applications that enable web-based real-time communication sessions that support web browser-to-web browser applications for voice calling, video chat, and/or file sharing (e.g., P2P file sharing) without plugins. That is, in some examples, the web-based real-time communication session can be a web real-time communication. For example, a web-based real-time communication session can include both a voice session and an IM/chat session combined into a single communication session. Such a combination can promote various forms of communication, for example, communication by voice and/or by chat, during the web-based real-time communication session.

A support engine (not shown) can, in some examples, communicate support from the support agent to the client. In some examples, such support can be communicated automatically (e.g., without client or support agent inputs) in response to initiation of a web-based real-time communication session. For example, a list of frequently asked questions (e.g., with respect to the purchase) and/or other information (e.g., purchase specific support information) can be communicated via the web-based real-time communication session to the client automatically. However, the present disclosure is not so limited. That is, the support agent can communicate support (e.g. support specific to the purchase) in an effort to support the purchase and/or satisfy the request from the client.

Figure 2 illustrates a diagram of an example of a computing device for purchase support according to the present disclosure. The computing device 220 can utilize software, hardware, firmware, and/or logic to perform a number of functions described herein.

For example, the computing device 220 can be a combination of hardware and instructions for purchase support. The hardware, for example can include a processing resource 222 and/or a memory resource 226 (e.g., computer-readable medium (CRM), data store, etc.) A processing resource 222, as used herein, can include a number of processors capable of executing instructions stored by a memory resource 226. Processing resource 222 can be integrated in a single device or distributed across multiple devices (e.g., multiple servers). The instructions (e.g., computer-readable instructions (CRI)) can include instructions stored on the memory resource 226 and executable by the processing resource 222 to implement a desired function (e.g. identify support specific to the purchase based on the displayed identifying information, etc.).

The memory resource 226 can be in communication with a processing resource 222. A memory resource 226, as used herein, can include a number of memory components capable of storing instructions that can be executed by processing resource 222. Such memory resource 226 can be a non-transitory CRM. Memory resource 226 can be integrated in a single device or distributed across multiple devices. Further, memory resource 226 can be fully or partially integrated in the same device as processing resource 222 or it can be separate but accessible to that device and processing resource 222. Thus, it is noted that the computing device 220 can be implemented on a client device and/or a collection of client device, on a support device, a collection of support devices on a link (e.g., an application server included in a link) and/or a collection of links, and/or on a combination of the client devices, support devices, and/or the links.

The memory resource 226 can be in communication with the processing resource 222 via a communication link (e.g., path) 224. The communication link 224 can be local or remote to a computing device associated with the processing resource 222. Examples of a local communication link 224 can include an electronic bus internal to a computing device where the memory resource 226 is one of volatile, non-volatile, fixed, and/or removable storage medium in communication with the processing resource 222 via the electronic bus.

The memory resource 226 can include a number of modules such as a display module 228, a identify module 229, a establish module 230, a communicate module 231, etc. The number of modules 228, 229, 230, 231 can include CRI that when executed by the processing resource 222 can perform a number of functions. The number of modules 228, 229, 230, 231 can be sub-modules of other modules. For example, the display module 228 and the identify module 229 can be sub-modules and/or contained within the same computing device. In another example, the number of modules 228, 229, 230, 231 can comprise individual modules at separate and distinct locations (e.g., CRM, etc.).

Each of the number of modules 228, 229, 230, 231 can include instructions that when executed by the processing resource 222 can function as a corresponding engine, including those as described herein. For example, the display module 228 can include instructions that when executed by the processing resource 222 can function as a display engine (not shown), for instance, to display, identifying information included in a resource identifier associated with a request from a client for support related to a purchase.

In some examples, the display module 228 can display information such as identifying information included in a resource identifier associated with a request from a client for support related to a purchase. For instance, the identifying information can be displayed via a graphical user interface (GUI) of a support device, as described herein, associated with a support agent having a capability to support the purchase based on the displayed identifying information. A capability to support the purchase refers to having a verified type/amount of suitable training and/or knowledge, having a title assigned to the support agent, and/or being include in a group (e.g., a group of support agents), among other possible ways designating the support agent as having a capability to support the purchase. Display module 228 can, for example, cause a display in response to receipt of a request for support, while initializing a communication between a client and a support agent, upon establishing a communication between a support agent and a client, during communication between a client and a support agent, and/or in various other manners to display information to promote purchase support.

An identify module 229 can include instructions that when executed by the processing resource 222 can identify support specific to the purchase based on the displayed identifying information. The support can, in some examples, be included in data store including support specific to a purchase and/or can be identified otherwise (e.g., by a support agent and/or automatically). For instance, support can be identified from support in a data store in response to receipt of a request for support related to a purchase. Such identification can advantageously promote purchase support, for instance, by utilizing the displayed identifying information (e.g., information identifying a purchase, a client, a warranty associated with the purchase, etc.) to quickly identify provide support information specific to the purchase, client and/or warranty associated with the purchase, etc., among other advantages.

The establish module 230 can include instructions that when executed by the processing resource 222 can establish a web-based real-time communication session between a client device associated with the client and the support device, as described herein. Establishing can include initiating, maintaining, and/or otherwise causing the web-based real-time communication session between a client device and a support device. Notably, the web-based real-time communication session is established directly between a client device and a support device (e.g., a support device included in a response group including a plurality of support agents supporting a particular type of purchase). A standard web browser can be used to facilitate the web-based real-time communication session (e.g., without no installation of a plugin and/or downloading other software to either a client device or a support device).

Examples of establishing include resolving a voice over internet protocol communication, maintaining a web real-time communication (WebRTC) such as a chat, voice, and/or video communication in a web browser. In some examples, establish can include establishing a WebRTC between a browser with a real-time communication capability of a support device and a web browser with a real-time communication capability of a client device. Such a web-based real-time communication session can advantageously enable communication between a client and a support agent without use of a public switched telephone network (PSTN) and difficulties tied to infrastructure and/or cost associated with a PSTN. That is, support can be communicated via a web-based real-time communication session, not a public switched telephone network. Additional advantages with the use of the present web-based real-time communication session include flexibility to easily alter, without a change from a client standpoint, a point of contact (e.g., a URI), in contrast to use of a PTSN that may rely upon a fixed phone number and/or a fixed number of physical phone lines and/or phones associated with fielding support calls to the phone number.

A communicate module can include instructions that when executed by the processing resource 222 can communicate the support specific to the purchase via the web-based real-time communication session from the support device to the client device. Examples of such communication can include voice, video, and/or chat, among other types of communication between a support agent and a client.

A generate module (not shown) include instructions that when executed by the processing resource 222 can generate a resource identifier. In some examples, the resource identifier can be generated in response to the purchase. A merchant and/or an original owner (e.g., a manufacturer) of a purchased good or resource may generate the resource identifier. For instance, a merchant can generate a response identifier in response to a purchased good and/or a purchased service being sold to a client.

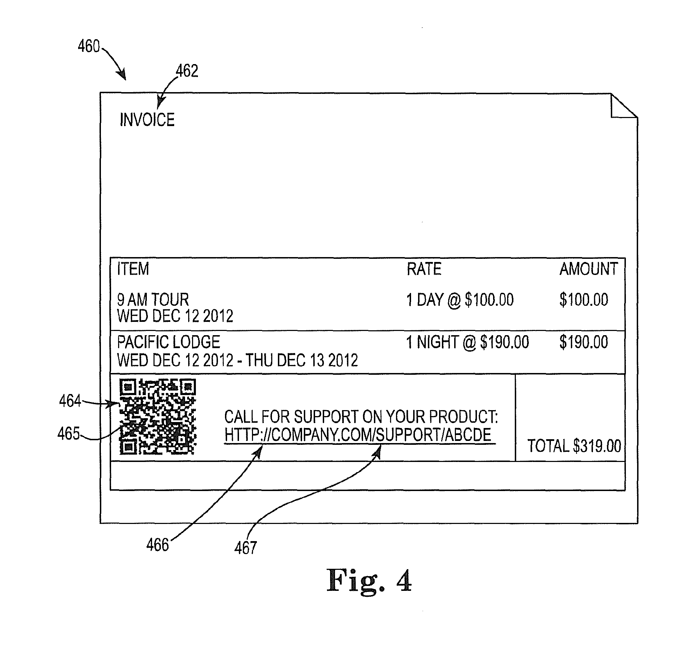

A resource identifier can be communicated to a client at a time of a purchase and/or following a purchase. For instance, a resource identifier can be associated with a record of the purchase. As used herein, a record of a purchase refers to information that includes identifying information including identifying information that identifiers a purchase, among other identifying information, as described in greater detail with respect to Figure 4, in an electronic (e.g., an email including an electronic invoice) and/or physical format (e.g., a printed invoice).

Figure 3 illustrates an example of an environment 340 in which various example processes can be implemented for purchase support according to the present disclosure. The environment 340 is shown to include a system 342 for purchase support, support devices 343-1, 343-2,..., 343-A, client devices 344-1, 344-2,..., 344-G, a data store 308, and a link 346.

The system 342 for purchase support can represent different combinations of hardware or hardware and instructions to support purchases. The system 342 for purchase support can include a computing device (not shown), for instance, computing device 220 as discussed with respect to Figure 2. The system 342 can include engines analogous to engines described with respect to Figure 1. For example, the system 342 can include a receive engine, an assign engine, a send engine, and an initiate engine, as described herein with respect to Figure 1, among other engines.

Identifying information and/or support specific to a purchase, among other information, can be viewed using a support device, such as support devices 343-1,..., 343-A. Support devices 343-1,..., 343-A represent devices that can generate/receive electronic data having browsers and/or other applications to communicate such data and/or facilitate viewing of identifying information and/or support specific to a purchase, among other abilities. Examples of support devices 343-1,..., 343-A include desktop/laptop computers, mobile phones, and/or servers, among other devices suitable for purchase support. Similarly, examples of client devices 344-1, ..., 344-G can include desktop/laptop computers, mobile phones, and/or servers, among other devices suitable for purchase support.

A client device may or may not be the same device as a purchased good. That is in some examples, a purchased good (e.g., a laptop) can receive a record of a purchase, provide identifying information (e.g., including identifying information that identifies the laptop), and/or otherwise promote purchase support. However, the present disclosure is not so limited. That is, another device, different than a purchased good and/or purchased service, can be used to promote purchase support.

In various examples, the support devices 343-1,..., 343-A and/or data store(s) 308 can be separate and distinct from the client devices 344-1, ..., 344-G. As described herein, being separate and distinct refers to an environment being physically separate and/or having separate network resources with respect to each other. In this manner, a support device can receive (e.g., remotely receive) a request for support from a client device. However, the present disclosure is not so limited. That is, the support devices, data store(s), and client devices can be at the same location (e.g., included in a common building and/or organization). Regardless, receipt of information (e.g., a request for support and/or identifying information) from the client devices 344-1,..., 344-G by the support devices 343-1,..., 343-A can promote purchase support, as described herein.

The support devices 343-1,..., 343-A and/or the client devices 344-1,..., 344-G can include an electronic display such as a GUI 345. A user interface (UI) can include hardware components and/or computer-readable instruction components. For instance, hardware components can include input components (e.g., a mouse, a touch screen, and a keyboard) and/or output components (e.g., a display). An example UI can include a GUI. A GUI can, for example, electronically represent a identifying information (e.g., identifying information such as a purchase name, a date of a purchase, a purchase price, a client, among other items associated with a particular purchase), provide an indication (electronic representation) of a request for support, and/or provide an indication of a respective support agent of a plurality of support agents that has a capability to support the purchase (e.g., a status identifying a particular agent has been assigned to a request for support and/or that a request for support has been submitted), among other electronic representations. A SIP and/or other information associated with a support agent (e.g., a support agent assigned to a request for support) can, in some examples, be displayed via the client devices 344-1,..., 344-G.

Link 346 (e.g., a network) represents a cable, wireless, fiber optic, and/or remote connection via a telecommunication link, an infrared link, a radio frequency link, and/or other connectors or systems that provide electronic communication. That is, the link 346 can, for example, include a link to an intranet, the Internet, or a combination of both, among other communication interfaces. The link 346 can also include intermediate proxies, for example, an intermediate proxy server, routers, switches, load balancers, and the like. However, the present disclosure is not so limited. That is, link 346 can represent a physical connection between the support devices 343-1,..., 343-A and the client devices 344-1,..., 344-G to communicate instructions between the client devices 344-1,..., 344-G, the support devices 343-1,..., 343-A, and/or the data store 308.

Figure 4 illustrate an example of a record according to the present disclosure. Records include invoices, emails, SMS/MMS messages, and business cards, among other records.

As illustrated in Figure 4, a record 460 can include an invoice 462. The invoice 462 can include a QR code 464 and/or a URI 466 as a resource identifier. The QR code can identifying information represented visually 465 and the URI can include identifying information represent as a series of characters 467 (number, letters, symbols, etc.), among other information such as information linking the resource identifier to a resource (e.g., a support group supporting a purchase associated with the resource identifier). In some examples, record can be an electronic record (e.g., an email) and/or a resource identifier can be encoded in the electronic record. For example, the resource identifier can be encoded in an electronic record as encrypted data through various encryption methods suitable to promote purchase support, as described herein.

Similar to the invoice illustrated in Figure 4, in some examples, a record of a purchase can have the resource identifier located on the record (e.g., printed on, etc.). Information, such as identifying information, can be received from the resource identifier encoded, printed on, or otherwise included in a record. For example, information can be received in response to a client scanning (e.g., flashing) a QR code, clicking on a URI (e.g., a displayed URI) and/or otherwise interacting with a resource identifier to cause information include in the resource identifier to be conveyed to another party (e.g., a support agent) that is different from the client.

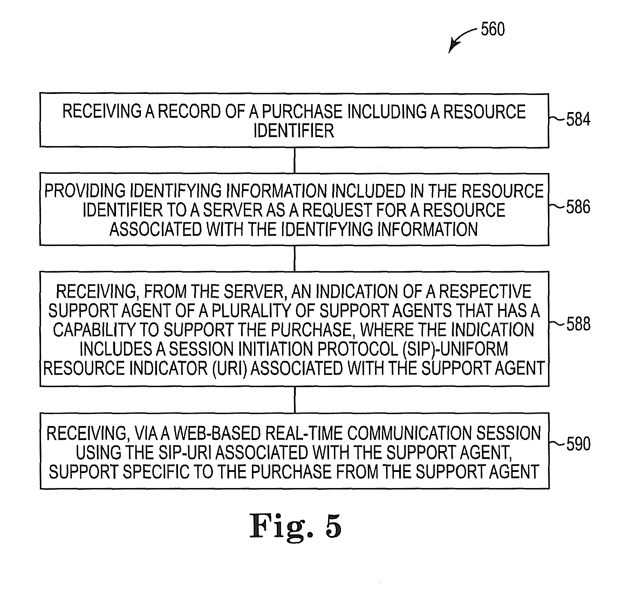

Figure 5 illustrates a flow diagram of an example of a method for purchase support according to the present disclosure. As shown at 584, in various examples, the method 580 can include receiving a record of a purchase including a resource identifier. Such a record to be physically received (e.g., a physical invoice) and/or electronically received (e.g., an email), for instance, depending upon whether the record is a physical and/or electronic record.

The method 580 can include providing identifying information included in the resource identifier (e.g., the received resource identifier) to a server as a request for a resource associated with the identifying information, as shown at 586. A server, such as those described herein, can include and/or be in communication with a data store (e.g., data store 308) that can store support information including support specific to a purchase and/or information associated with support agents. The information associated with the support agents can include information that enables the server or another device (e.g., a support device) to assign a support agent to the request (e.g., to field the request). For example, a service level agreement, support agent availability at a given time of a request for service, or other rules can be used to assign a respective support agent of a plurality of support agents to the request.

As shown at 588, the method 580 can include receiving, from the server, an indication, as described herein, of a respective support agent of a plurality of support agents that has a capability to support the purchase. The indication can include a SIP-URI associated with the support agent, among other information. The indication can be displayed and/or communicated to a client device and/or other device in a manner suitable to facilitate initiation and/or establishment of a web-based real-time communication session using the SIP between a client device and a support device.

The method 580 can include receiving, via a web-based real-time communication session using the SIP-URI associated with the support agent, support specific to the purchase from the support agent. The support specific to the purchase is based on the at least some of the identifying information that is provided to a support agent. For example, support can be specific to a type, a make, a module, a date of manufacturer, a client, and/or a warranty associated with the purchase, among other information on which support specific to the purchase can be based.

In some examples, the support request can include only identifying information associated with the resource identifier. That is, a client may only have to provide information included in the resource identifier to a support device to enable a support agent to provide the client with purchase specific support based solely on the identifying information associated with the resource identifier. In this manner, a client does not have to recall or otherwise provide identifying information to a support agent but rather can rely upon merely providing the identifying information included in the resource identifier to receive support specific to the purchase, for instance, in response to providing the identifying information (e.g., sending a request for support including the identifying information).

In the foregoing detailed description of the present disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the present disclosure.

The figures herein follow a numbering convention in which the first digit corresponds to the drawing figure number and the remaining digits identify an element or component in the drawing. For example, reference numeral 102 may refer to element "02" in Figure 1 and an analogous element may be identified by reference numeral 202 in Figure 2. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense. Further, as used herein, "a number of" an element and/or feature can refer to one or more of such elements and/or features.

As used herein, "logic" is an alternative or additional processing resource to perform a particular action and/or function, etc., described herein, which includes hardware, e.g., various forms of transistor logic, application specific integrated circuits (ASICs), etc., as opposed to computer executable instructions, e.g., software firmware, etc., stored in memory and executable by a processor.

## Claims

1. A system for purchase support, comprising a receive engine, an assign engine, a send engine, and an initiate engine, wherein:
the receive engine receives a request from a client for a resource associated with a resource identifier that is associated with a purchase, wherein the resource identifier includes identifying information that identifies the purchase;
the assign engine assigns based on the identifying information, a support agent, having a capability to support the purchase, to the request;
the send engine sends the request to the support agent; and
the initiate engine initiates a web-based real-time communication session between the client and the support agent.

2. The system of claim 1, wherein the purchase includes at least one of a purchased good or a purchased service.

3. The system of claim 1, wherein the web-based real-time communication session is a web real-time communication.

4. The system of claim 1, including a support engine to communicate support from the support agent automatically in response to initiation of web-based real-time communication session.

5. The system of claim 1, wherein the send engine sends the request to a session initiation protocol (SIP)-uniform resource identifier (URI) associated with the support agent.

6. The system of claim 1, wherein the resource identifier includes at least one of a quick response (QR) code or a uniform resource identifier (URI).

7. A non-transitory computer readable medium storing instructions executable by a processing resource to cause a device to:
display, identifying information included in a resource identifier associated with a request from a client for support related to a purchase, via a graphical user interface of a support device associated with a support agent having a capability to support the purchase based on the displayed identifying information without additional information;
identify support specific to the purchase based on the displayed identifying information;
establish a web-based real-time communication session between a client device associated with the client and the support device; and
communicate the support specific to the purchase via the web-based real-time communication session from the support device to the client device.

8. The medium of claim 7, including instructions to generate the resource identifier in response to the purchase.

9. The medium of claim 8, including instructions to associate the generated resource identifier with a record of the purchase.

10. The medium of claim 9, wherein the record is an electronic record, and wherein the resource identifier is encoded in the electronic record.

11. The medium of claim 10, including instructions to receive identifying information from the resource identifier encoded in the electronic record.

12. The medium of claim 7, including instructions to establish the web-based real-time communication session between a web browser with a real-time communication capability of the support device and a web browser with a real-time communication capability of a client device.

13. The medium of claim 7, wherein the instructions to communicate include instructions to communicate the support via the web-based real-time communication session, not a public switched telephone network.

14. A method for purchase support, comprising:
receiving a record of a purchase including a resource identifier;
providing identifying information included in the resource identifier to a server as a request for a resource associated with the identifying information;
receiving, from the server, an indication of a respective support agent of a plurality of support agents that has a capability to support the purchase, wherein the indication includes a session initiation protocol (SIP)-uniform resource indicator (URI) associated with the support agent; and
receiving, via a web-based real-time communication session using the SIP-URI associated with the support agent, support specific to the purchase from the support agent.

15. The method of claim 14, including receiving a record of a purchase having the resource identifier located on the record of the purchase, and wherein the record is an invoice.
